# EUROPEAN PATENT APPLICATION

(11) **EP 1 274 237 A1**
(43) Date of publication of application: **08.01.2003**
(21) Application number: 01830446.9
(22) Date of filing: 03.07.2001
(51) Int. Cl.: H04N 5/64

(54) **Display with screen and loudspeaker and audio set**

(71) Applicant: VIDEOCOLOR S.p.A., 03012 Anagni (IT)
(72) Inventor: Caltagirone, Nicola, 03011 Alatri (FR) (IT); Datti, Massimiliano, 03013 Ferentino (FR) (IT)
(74) Representative: Klausner, Erich

(57) **Abstract**

A display is proposed with a cabinet (8) whereto a screen (4) is mounted and with a duct (10) whereto a loudspeaker (12) is mounted. A spigot (30) attached to the cabinet (6) is engaged in a cylindrical body (18, 20) of the duct (10) with interposition of a gum body (32).

The duct (10) is thus mounted to the cabinet (6) via a pivot joint (18, 30 ; 20, 30) which movement is restrained by a dampening element (32).

An audio set comprising the loudspeaker (12), the duct (10) and at least one plastic support (22, 24) is also proposed.

## Description

The invention relates to a display with screen and loudspeaker and to an audio set.

A display (like for instance a TV set) has a screen which is its active part displaying images and often at least one loudspeaker to generate sound associated with the images. Generally, the screen (for instance the screen of a cathode ray tube) is mounted on a cabinet which forms the external body of the display and the loudspeaker is affixed to a duct which is mounted to the cabinet.

Due to the mechanical link between loudspeaker and screen, the vibrations generated by the loudspeaker when active are transmitted to the screen and can disturb the normal operation of the screen.

Solutions have already been proposed to reduce the transmission of vibrations from the loudspeaker to the screen, like for instance in patent application publication JP 9 - 065 251.

The invention aims at a new and simple solution for an efficient reduction of the vibrations transmitted to the screen and accordingly proposes a display comprising a cabinet whereto a screen is mounted and a duct whereto a loudspeaker is mounted, wherein said duct is mounted to the cabinet via a pivot joint which movement is restrained by a dampening element.

According to preferred features :
- a spigot attached to the cabinet is engaged in a cylindrical body of the duct with interposition of a gum body ;
- the spigot is part of a plastic support affixed to the cabinet;
- the plastic support has an arm part for abutment of the cylindrical body;
- the duct has an upper cylindrical body and a lower cylindrical body which are each engaged on a spigot attached to the cabinet with interposition of a gum body ;
- said pivot joint defines an axis which is parallel to a front face of the cabinet;
- said loudspeaker is mounted on a lateral face of the duct, a front face of the duct facing the cabinet;
- the pivot joint, the duct and the loudspeaker define respectively an axis, a propagation direction and an emission direction which are essentially perpendicular to one another.

The invention also proposes an audio set comprising a support and a duct whereto a loudspeaker is mounted, wherein said duct is mounted to said support via a pivot joint which movement is restrained by a dampening element.

Preferably, the pivot joint, the duct and the loudspeaker define respectively an axis, a propagation direction and an emission direction which are essentially perpendicular to one another.

The invention and other features thereof will be understood in the light of the following description made with reference to the attached drawings where :
- figure 1 represents schematically the main elements of a display according to the invention ;
- figure 2 is a side view of a duct and loudspeaker mounted to a cabinet according to the invention ;
- figure 3 is a top view of the elements of figure 2 ;
- figure 4 shows the vibrations transmitted to the screen depending on the frequency with a conventional system and with the system of figure 2.

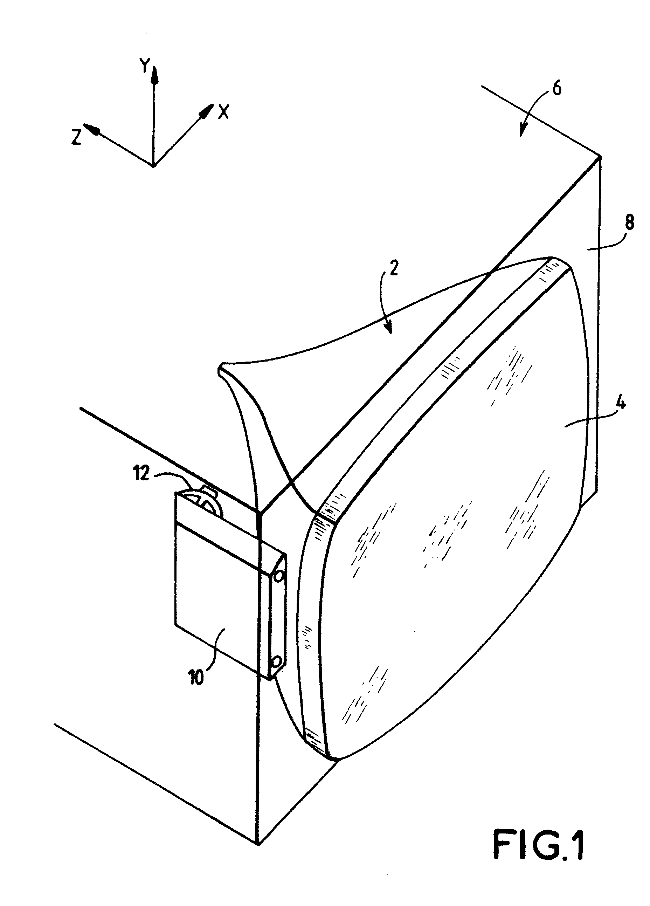

The display of figure 1 is a TV set equipped with a cathode ray tube (CRT) 2 which front face defines a screen 4. The CRT 2 is mounted in a cabinet 6 by conventional means (not represented). The front face 8 of the cabinet 6 surrounds the screen 4. For the purpose of the clarity of description, the front face 8 of the cabinet 6 is supposed to be vertical.

A duct 10 carrying a loudspeaker 12 is mounted to the rear side of the front face 8 of the cabinet 6. The duct 10 allows to transmit of the sound generated by the loudspeaker 12 to the front of the TV set and to direct it to the viewer-listener. In the area where the duct 10 is mounted, the front face 8 of the cabinet 6 has the form of a grid (not represented). The represented duct and loudspeaker are at the left-hand side (seen from the viewer-listener) but a similar set can be provided as often at the right-hand side to realise a stereophonic installation.

The main direction of the duct 10, *i.e.* the direction of sound wave propagation, is horizontal and perpendicular to the cabinet front face 8. As depicted in figure 1, the loudpseaker 12 is mounted on a lateral face of the duct 10 ; the emission direction of the loudspeaker 12 is thus horizontal and perpendicular to the main direction of the duct 10.

The duct 10 is mounted to the front face 8 of the cabinet 6 at two points as is described with details below.

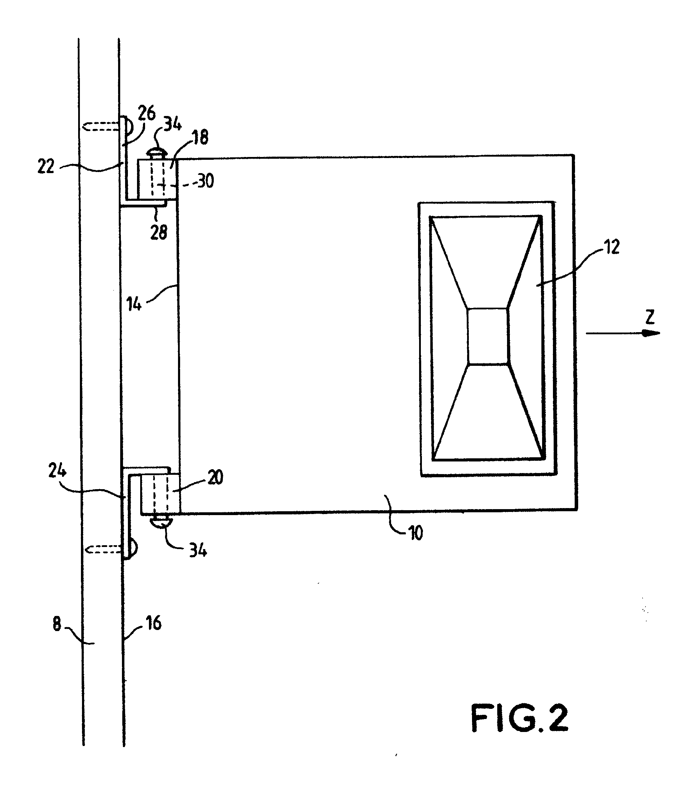

Figure 2 is an enlarged view of a duct and loudspeaker as in figure 1, except this time a right-hand side set is represented. The references used in relation to figure 1 are kept for simplicity of the description.

As previously explained, the duct 10 carries the loudspeaker 12 on a lateral vertical face, *i.e*. a face parallel to the main direction of the duct 10. An upper cylindrical body 18 and a lower cylindrical body 20 protrudes from the front face 14 of the duct 10, *i.e.* the vertical face which is facing the rear side 16 of the front face 8 of the cabinet 6.

An upper plastic support 22 and a lower plastic support 24 are attached by means of screws to the rear side 16 of the front face 8 of the cabinet. The upper plastic support 22 and the lower plastic support 24 comprise each a fixation part 26, an arm part 28 and a spigot 30.

The fixation part 26 is meant to receive the screw or screws for attachment to the cabinet 6 ; the spigot is meant to cooperate with the upper or lower cylindrical body 18, 20 as explained below ; the arm part 28 is meant to link the fixation part 26 and spigot 30. Furthermore, as it is clear from figure 2, the upper and lower cylindrical bodies 18, 20 abut against the corresponding arm part 28.

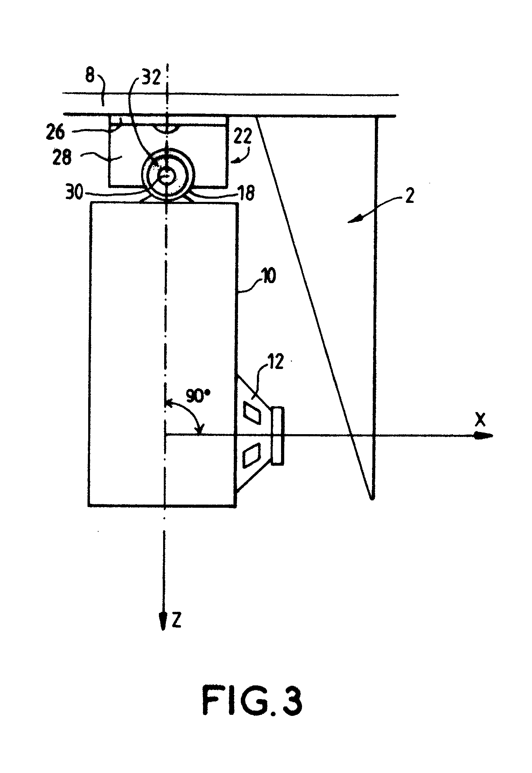

As clear from figure 3, the spigot 30 of the upper support 22 is engaged with the upper cylindrical body 18 with interposition of a cylindrical gum body 32 as dampening element. The spigot 30 and the cylindrical body 18 have a common axis which is vertical and parallel to the front face 8 of the cabinet 6. The spigot 30, the gum body 32 and the cylindrical body 18 realise a pivot joint which movement is restrained by a dampening element.

In similar fashion, the spigot 30 of the lower support 24 is engaged with the lower cylindrical body 20 with interposition of a further gum body.

According to the embodiment represented on figure 2, the upper cylindrical body 18 and the lower cylindrical body 20 are respectively attached to the corresponding spigot 30 by means of a screw 34. Alternatively, it could be relied only on the abutment by the arm parts 28 (as indicated above) for attachment of the duct 10 to the cabinet 6, provided the press-fit link between spigot 30, gum body 32 and cylindrical body 18, 20 is strong enough.

It can also be noted on figure 3 that the position of the loudspeaker 12 (mounted to a lateral face of the duct 10) allows to take advantage of the shape of the CRT which horizontal section is smaller and smaller as getting away from the cabinet front face 8.

The mechanical link between duct 10 and cabinet 6 which has been described above allows to immobilise the duct 10 with respect to the cabinet 6 when only considering static movements (zero frequency movements) and at the same time to dampen the vibrations (time-varying movements) and transmit the remainder of vibrations in circular way (around the spigot axis) which greatly reduce their disturbance to the screen 4.

As the loudspeaker 12 is mounted on a lateral face of the duct 10, its emission direction is perpendicular to a plane comprising the duct main direction and the cylindrical body-spigot axis . This specific construction emphasizes the effect of transmission of the vibrations around the spigot axis and consequently favours the reduction of disturbance to the screen 4.

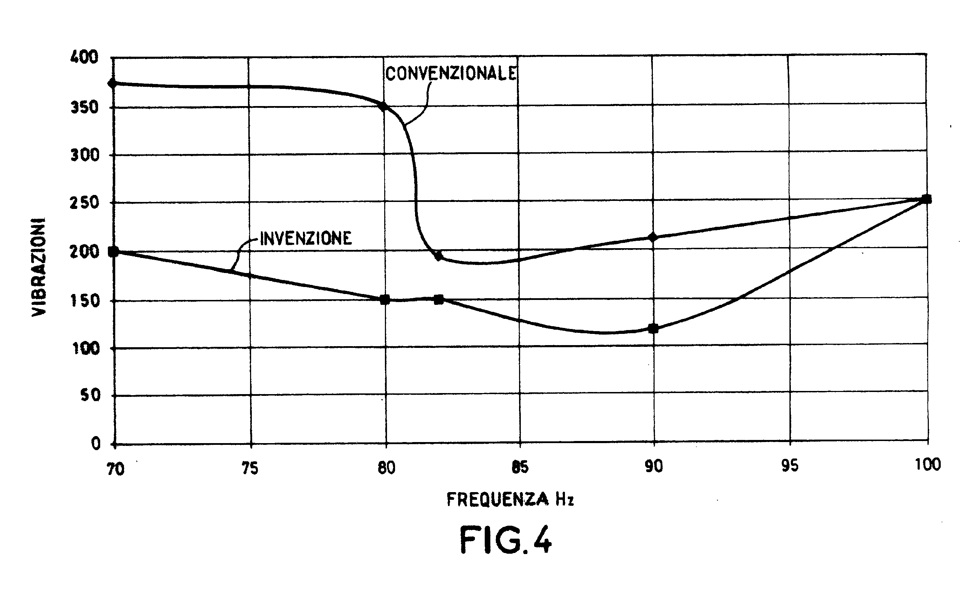

Figure 4 shows the level of the vibrations at the CRT in a system according to the invention compared to a conventional system. The results of the above described effect are clearly apparent.

## Claims

1. Display comprising :
- a cabinet (6) whereto a screen (4) is mounted,
- a duct (10) whereto a loudspeaker (12) is mounted,
**characterised in that**
said duct (10) is mounted to the cabinet (6) via a pivot joint (18, 30 ; 20, 30) which movement is restrained by a dampening element (32).

2. Display according to claim 1, wherein a spigot (30) attached to the cabinet (6) is engaged in a cylindrical body (18, 20) of the duct (10) with interposition of a gum body (32).

3. Display according to claim 2, wherein the spigot (30) is part of a plastic support (22, 24) affixed to the cabinet (6).

4. Display according to claim 3, wherein the plastic support (22, 24) has an arm part (28) for abutment of the cylindrical body (18, 20).

5. Display according to claim 1, wherein the duct (10) has an upper cylindrical body (18) and a lower cylindrical body (20) which are each engaged on a spigot (30) attached to the cabinet (6) with interposition of a gum body (32).

6. Display according to any of the preceding claims, wherein said pivot joint defines an axis which is parallel to a front face (8) of the cabinet (6).

7. Display according to any of the preceding claims, wherein said loudspeaker (12) is mounted on a lateral face of the duct (10), a front face (14) of the duct facing the cabinet (6).

8. Display according to any of the preceding claims, wherein the pivot joint (18, 30 ; 20, 30), the duct (10) and the loudspeaker (12) define respectively an axis, a propagation direction and an emission direction which are essentially perpendicular to one another.

9. Audio set comprising :
- a support (22, 24),
- a duct (10) whereto a loudspeaker (12) is mounted,
**characterised in that**
said duct (10) is mounted to said support (22, 24) via a pivot joint (18, 30 ; 20, 30) which movement is restrained by a dampening element (32).

10. Audio set according to claim 9, wherein the pivot joint (18, 30 ; 20, 30), the duct (10) and the loudspeaker (12) define respectively an axis, a propagation direction and an emission direction which are essentially perpendicular to one another.
